# EUROPEAN PATENT SPECIFICATION

(11) **EP 1 646 887 B1**
(45) Date of publication and mention of the grant of the patent: **18.02.2009**
(21) Application number: 03776149.1
(22) Date of filing: 04.12.2003
(51) Int. Cl.: G01S 7/02, H04W 16/00

(54) **A METHOD AND A CENTRAL CONTROL UNIT FOR CHANNEL SWITCHING IN A PACKET-BASED COMMUNICATION NETWORK**
VERFAHREN UND ZENTRALE STEUEREINHEIT ZUR KANALUMSCHALTUNG IN EINEM AUF PAKETEN BASIERENDEN KOMMUNIKATIONSNETZ
PROCEDE ET UNITE DE CONTROLE CENTRALE POUR LA COMMUTATION DE CANAUX DANS UN RESEAU DE COMMUNICATION BASE SUR DES PAQUETS

(30) Priority: 10.07.2003 SE 0302048
(43) Date of publication of application: 19.04.2006
(73) Proprietor: Infineon Technologies AG, 81669 München (DE)
(72) Inventor: LEWIS, Michael, S-195 52 Märsta (SE); HJELM, Mikael, S-722 31 Västeräs (SE)
(74) Representative: Karlsson, Leif Karl Gunnar
(86) International application number: PCT/SE2003/001894
(87) International publication number: WO 2005/006013

(56) References cited:
- EP-A1- 1 248 477
- WO-A1-03/005643
- WO-A1-03/047290
- WO-A1-03/050560

## Description

### TECHNICAL FIELD

The invention relates to multi-channel packet-based communication networks in general, more specifically to a central control unit in a wireless local area network and a method for channel switching in such a network.

### BACKGROUND OF THE INVENTION

The 802.11 a wireless local area network (WLAN) standard defines operations in the 5 GHz radio frequency band. In this frequency band, there are regulatory requirements, at least in Europe, to avoid transmissions in frequency bands or channels that are occupied by radar signals. Since these radar signals do not necessarily remain on a single channel, it might be necessary to cease normal data transmissions or data traffic on one channel and change to another channel so as not to disturb the radar. Another circumstance in which a channel switch may be necessary is if a channel has become subject to high interference. In this case, it is not necessary to cease transmission but the probability of receiving a transmission of data successfully is sufficiently low that the effect on the data output is very similar.

The so-called 802.11h draft standard specifies a method for channel switching, whereby a central control unit or controller in a network can indicate to the other wireless devices associated with it that it will change to another channel by a message transmitted either as part of the regular announcement (called the beacon in 802.11), or in a separate channel switch announcement which contains the message. This message causes a channel switch to be scheduled either immediately after the current transmission, or before the N^{th} subsequent beacon transmission with repeat transmissions of the channel switch message in each beacon leading up to the actual channel switch time.

The reason for delaying the channel switch in this manner is that a number of stations or devices in the network may be in so-called power-save or sleep mode and thereby unable to receive the messages. A graphical description of this so-called STA sleep functionality can be found in Fig. 1. According to the 802.11 protocol, these sleeping stations or devices are required to return to operating condition shortly before each expected beacon transmission time in order to check for pending traffic. Hence, the known method implies that the central controller repeats the message in subsequent beacons until all stations associated with the central controller are guaranteed to have awoken from power-save or sleep mode. This procedure is shown graphically in Fig. 2. A flow-chart of the known method is shown in Fig. 3.

A drawback of this known method is that, according to certain regulatory requirements in the standard, all normal data traffic on a channel must cease once radar signals have been detected on the channel (i.e. after the first channel switch announcement sent by the central controller). The requirements allow sending the beacons on the old channel enough times to ensure that all connected devices have heard the announcement, typically 10 seconds total with a maximum of 20 ms control traffic accumulated. This means that all the currently active devices or terminals in the network must cease sending data traffic until all of the necessary beacon messages have been sent (with a typical spacing between beacons of 0.1s and a typical sleep duration in the range of some seconds), before the channel switch occurs and the terminals can resume operation on the new channel. This causes an undesirable disruption in the data traffic that is particularly disastrous for data traffic with so called quality of service (QoS) requirements on maximum delay, such as video or voice traffic.

A second drawback of the known method is that if the channel switch is made too quickly, with too few repeats of the announcements, there might be terminals or devices in the network that are left without a central control unit on the old channel. This means that the terminal or device must start searching through a list of frequencies or channels to try to find the old central controller or an alternative one, which is time consuming. In QoS terms, this will be a lost link.

A third drawback of the known method is that if the announcements are repeated many times, there will be a loss of traffic during the times when the announcements are made which will also lead to a lost link.

A method as described above dealing with channel switching upon detection of interfering signals like radar signals is disclosed e.g. in WO 03/005643.

### SUMMARY OF THE INVENTION

Due to the above mentioned problems there is a need for a method that limits the disruption in the data traffic caused by channel switching in response to detection of radar signals or interference on a channel, while still ensuring that as many associated devices as possible can detect the channel switch.

The method according to the invention solves the problem by the central control unit upon detection of radar signals on a first channel announcing an immediate channel switch; then switching channel and resuming traffic on a second channel as soon as possible. To make sure that all devices or terminals connected to or associated with the central control unit hear at least one such announcement, the central control unit sends double beacon messages, switching back to the first channel to repeat the beacon message with the channel switch announcement (or alternatively, sending a separate channel switch announcement) as well as sending beacons to indicate its presence on the second channel (without a channel switch message).

An advantage of the present invention is that is provides a fast channel switch for those terminals or devices that are active at the time of the first channel switch announcement, while maintaining stable operation for those devices that are in sleep mode or fail to receive beacons due to interference.

### BRIEF DESCRIPTION OF THE DRAWING

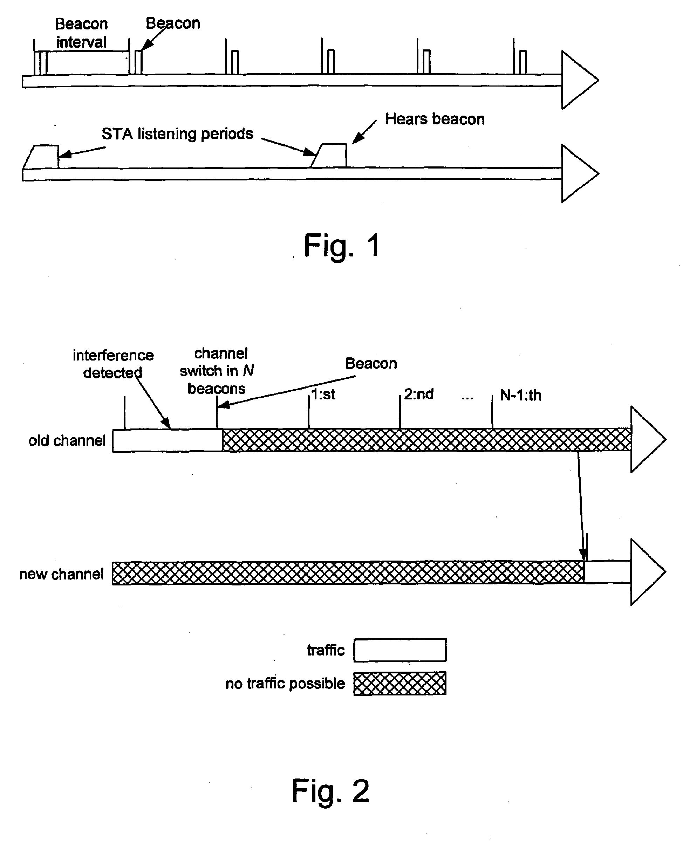

The invention will be described more in detail below with reference to the appended drawings in which
Fig. 1 illustrates the STA sleep functionality of terminals in a network,
Fig. 2 illustrates a known channel switching method,

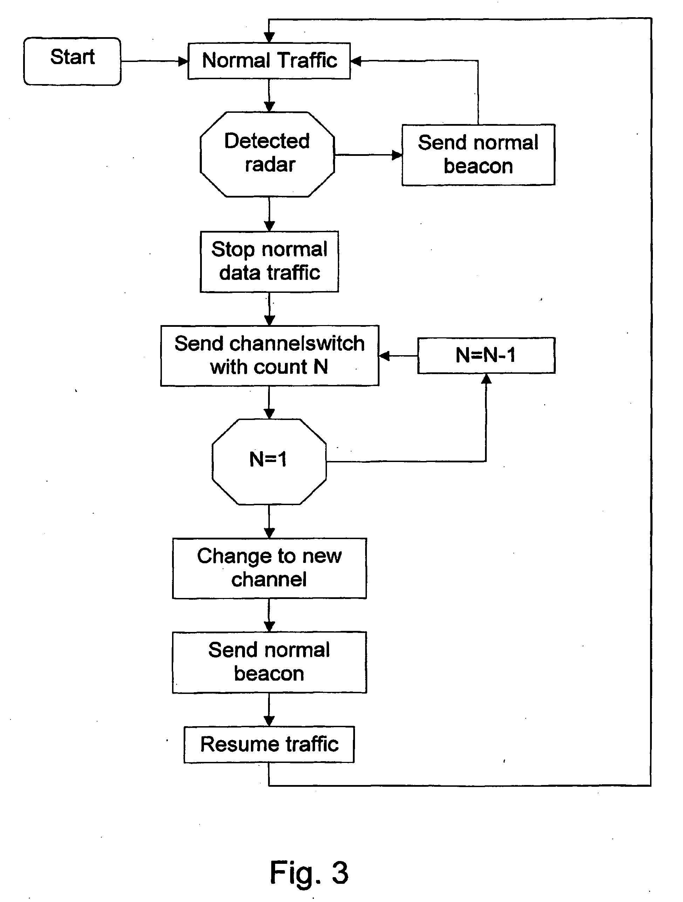

Fig. 3 illustrates a flow chart of the known method of channel switching,

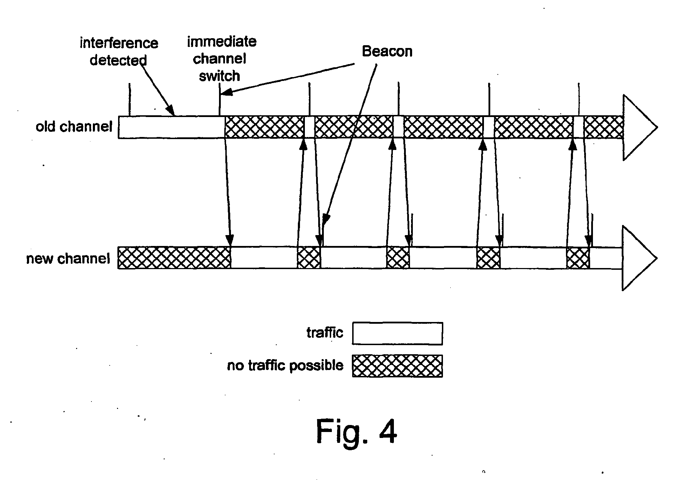

Fig. 4 illustrates an embodiment of a method according to the invention,

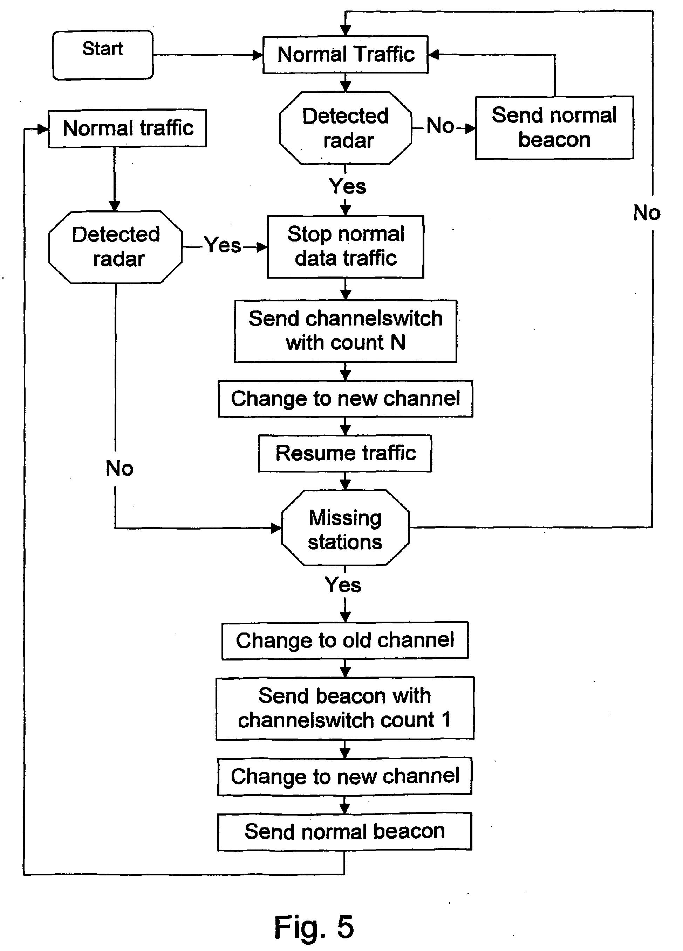

Fig. 5 illustrates a flow chart of an embodiment of the method according to the invention.

### DESCRIPTION OF A PREFERRED EMBODIMENT OF THE INVENTION

The invention is easiest described by using the 802.11h mechanism to perform a channel switch; the 802.11 beacon mechanism, and the 802.11 power save mechanism. The 802.11 beacon functionality specifies that regular beacons must be sent at so-called target beacon transmission time slots on a channel, with a specified spacing called a beacon interval. The length of this is implementation dependent but is typically around 100 ms.

A method and a central control unit according to the invention are described in relation to Fig. 4 and Fig. 5, but also other embodiments are possible.

In a wireless packet-based communication network, data traffic on a first channel or frequency is controlled by a central control unit that indicates its presence on the first channel by transmitting announcements or beacons at so called beacon transmission time slots that are separated by specified time intervals. A number of terminals or devices are associated with the central control unit. These devices are either active i.e. transmitting or receiving data or in so called power-save or sleep-mode i.e. only listening to or checking the first channel for any pending data traffic at specified time intervals. In addition to directing the data traffic the central control unit also checks the first channel for possible interference e.g. radar signals, either directly or by proxy, i.e. requesting other devices to perform measurements.

Upon detection of radar signals on the first channel see Fig. 4 and Fig. 5, the central control unit according to the invention locates and selects an alternative second channel that is determined free from radar signals. Subsequently, the central control unit transmits a first channel switch message (either immediately in a separate channel switch message, or contained in the beacon at the first possible beacon transmission slot) with a channel switch count set to zero, thus implying to active and/or listening devices in the communications network that it will switch to the second channel immediately after the transmission. The channel switch message includes an address to the second channel, which the central control unit has determined free from radar signals or other interference.

The central control unit then leaves the first channel as soon as the first channel switch beacon is transmitted. The data traffic is subsequently resumed on the second channel as soon as the central control unit has had a chance to switch to the second channel, which will be a very brief interval. When a beacon transmission interval has passed since the last beacon was transmitted on the first channel, e.g. typically 100 ms, the central control unit switches back to the first channel and sends a second channel switch message, thus encouraging devices that hear the channel switch message to change to the second channel. This second channel switch message can be sent in a beacon, with the channel switch count set to one, thus encouraging devices that hear the channel switch message to switch to the second channel before the next expected beacon transmission time slot. Alternatively, the second channel switch message can be sent in a separate channel switch message with the channel switch count set to zero, thus encouraging devices that hear the channel switch message to immediately switch to the second channel. The central control unit then switches back to send a regular beacon on the second channel, see Fig. 4 and Fig. 5. Sending the channel switch announcement in a beacon with a channel switch count of one ensures that devices receive a regular flow of beacons and have adequate time to change channel, while sending the channel switch announcement in a separate message with a channel switch count of zero causes newly-awakened devices to move as rapidly as possible to the new channel but may lead to them missing the following regular beacons on the second channel.

Regular beacons, by definition, are beacons that are sent by the central control unit to indicate its presence on a specific channel.

The regular beacon transmission on the second channel is then slightly delayed, but this is entirely allowable since all devices in the network must be able to accept delays in beacon transmission as they can occur due to other devices transmitting at the target beacon transmission time.

In order to enable terminals or devices that are in sleep mode, or that do not hear the beacons due to interference, to hear at least one channel switch message, the second channel switch message with the channel switch count set to one on the first channel is repeated until a predetermined number of second channel switch messages have been sent, or until a predetermined time interval, e.g. 10 seconds, has elapsed from the transmission of the first channel switch beacon, or until the total accumulated transmission time of the first and second channel switch messages reaches a certain specified value, e.g. 20 ms.

As a result the central control units either transmits double beacons (except for the first beacon in the case where the first channel switch message is sent in a beacon) for each permissible beacon transmission time slot, but on two different channels and with a short delay between the two beacons; or alternatively send a separate channel switch message on the first channel at the beacon transmission time slot followed shortly afterwards by a regular beacon on the second channel. The only interruption in the data traffic for those devices that hear the first channel switch message on the first channel and adheres to the channel switch is the channel switch time, which should be small e.g. below 5 ms. This should be acceptable for most QoS applications: terminals that are in sleep mode have, by definition, no active QoS links.

The invention exploits the fact that the regular beacon transmissions on a channel are allowed to be delayed somewhat, since according to the 802.11 standard protocol it must be accepted that some other station will be transmitting when the beacon should have been sent, so that the central control unit must delay its own transmission. This assures that a device or terminal that hears the first channel switch message and adheres to it only hears the first regular beacon sent on the second channel, and devices that hear any one of the second channel switch messages switches channels before the next beacon transmission slot, thereby only hearing any one of the regular beacons on the second channel.

One other possible complementary step, in order to enable as many of the devices connected to the central control unit as possible to notice the channel switch, is to broadcast a message on the second channel which in some manner detects the number of terminals that have followed the central control unit to the second channel. By comparing this number to the number of terminals originally associated with the central control unit at the first channel, the central control unit can determine if the second channel switch messsage transmissions should continue or if terminals not at the second channel should be counted as lost links.

There is also a possibility to use the method according to the invention if the interference level on the first channel is so high that it is almost impossible for devices that are associated to the first channel to hear the messages. The channel switch is then motivated by the interference level, which could be due to radar signals or any other interference. The method according to the invention would then make it possible for those devices that hear the channel switch messages to resume traffic on the second channel while the repeated channel switch messages on the first channel increases the probability that the other stations or devices that were left on the first channel hear a message as well.

For the case that the central control unit is an 802.11 access point (abbreviated by AP), through which all traffic is routed, there is a possibility of missing traffic during the times that the AP is transmitting messages on the first channel (although this is small since stations should avoid transmitting normal data after the target beacon transmission time). This situation can be avoided by an additional step, which is to use the so-called 802.11h quiet period to indicate that the AP cannot receive traffic to make sure that the stations does not try to communicate with the AP when it is off the channel. The quiet period is defined by a message in the previous beacon transmission, and specifies an interval during which no stations or devices are allowed to transmit: the original use for this was to provide a time when radar detection measurements could be performed.

The invention has been described in the context of an 802.11/802.11h wireless LAN system. However, it is applicable to any communication network that employs comparable mechanisms.

## Claims

1. A method of channel switching in a packet-based communication network, where data traffic takes place on a first channel that is controlled by a central control unit which indicates its presence on the first channel by transmitting regular beacons with a specified time interval, and where devices associated with the central control unit are active, or leaving sleep mode to listen for pending data traffic at specified time intervals, comprising the steps of:
a) detecting a radar signal on the first channel and in response to the detection interrupting the data traffic on the first channel,
b) locating and selecting a second channel that is free from radar signals,
c) transmitting a first channel switch message on the first channel, signaling to active and/or listening devices that a channel switch will occur,
d) switching to and resuming data traffic on the second channel,
e) transmitting a second channel switch message on the first channel, signaling to active and/or listening devices that a channel switch will occur,
**characterized by**
f) repeatedly transmitting second channel switch messages at predetermined intervals on the first channel and with a short delay transmitting a regular beacon at the second channel,

2. A method according to claim 1, **characterized by** the step of setting a channel switch count to zero in the first channel switch message, thus signaling to active and/or listening devices that a channel switch will occur immediately after the beacon transmission.

3. A method according to claim 2, **characterized by** the step of setting the channel switch count to one in the second channel switch message contained in a beacon, thus signaling to active and/or listening devices that a channels switch will occur before the next beacon transmission.

4. A method according to claim 2, **characterized by** the step of setting the channel switch count to zero in the second channel switch message which is sent separately, not contained in a beacon, thus signaling to active and/or listening devices that a channel switch will occur immediately.

5. A method according to any of claims 1 to 4, **characterized by** continuing the steps of repeatedly transmitting second channel switch messages at predetermined intervals on the first channel and transmitting a regular beacon on the second channel until a select number of second channel switch messages have been sent on the first channel.

6. A method according to any of claims 1 to 4, **characterized by** continuing the steps of repeatedly transmitting second channel switch messages at predetermined intervals on the first channel and transmitting a regular beacon on the second channel until a predetermined time interval has passed from the first channel switch message transmission.

7. A method according to any of claims 1 to 4, **characterised by** continuing the steps of repeatedly transmitting second channel switch messages at predetermined intervals on the first channel and transmitting a regular beacon on the second channel until the total transmission time for the first and second channel switch messages reaches a predetermined value.

8. A method according to any of the above claims, **characterized by** the additional step of canceling transmitting second channel switch messages on the first channel, while maintaining data traffic on the second channel and transmitting regular beacons at specific intervals on the second channel.

9. A central control unit for channel switching in a packet-based communication network, where data traffic takes place on a first channel that is controlled by the central control unit provided to indicate its presence on the first channel by, transmitting regular beacons with a specified time interval, and where devices associated with the central control unit are active or leaving sleep mode to listen for pending data traffic at specified time intervals,
a) the central control unit is provided to detect radar signals on the first channel and in response to the detection interrupt the data traffic on the first channel,
b) the central control unit is provided to locate and select a second channel that is free from radar signals,
c) the central control unit is provided to transmit a first channel switch message at the first possible beacon transmissions slot at the first channel and thereby signal to active and/or listening devices that a channel switch will occur,
d) the central control unit is provided to switch and resume data traffic on the second channel
e) the central control unit is provided to transmit a second channel switch message on the first channel and thereby signal to active and/or listening devices that a channel switch will occur,
**characterized in that**:
f) the central control unit is provided to repeatedly transmit second channel switch messages at predetermined intervals on the first channel and to switch back to the second channel to transmit regular beacons with a short delay.

10. A central control unit according to claim 9, **characterized in that** a channel switch count in the first channel switch message is set to zero.

11. A central control unit according to claim 9 or claim 10, **characterized in that** each second channel switch message is contained in a beacon and that the channel switch count in each second channel switch message is set to one.

12. A central control unit according to any of claims 9-11, **characterized in that** the central control unit is provided to cancel transmission of the second channel switch messages on the first channel when a predetermined number of second channel switch messages have been transmitted or after a predetermined time interval from the transmission of the first channel switch message, or when the total transmission time of the first and second channel switch messages reaches a specific value and to maintain the data traffic and transmission of regular beacons on the second channel.

## Patentansprüche

1. Verfahren eines Kanal-Schaltens in einem Paket-basierten Kommunikationsnetzwerk, bei dem Datenverkehr auf einem ersten Kanal stattfindet, der von einer zentralen Steuereinheit gesteuert wird, die ihre Präsenz auf dem ersten Kanal durch Übertragen regulärer Signalfeuer mit einem spezifizierten Zeitintervall anzeigt und bei dem Geräte, die mit der zentralen Steuereinheit verknüpft sind, aktiv sind oder einen Schlaf-Modus verlassen, um nach anstehendem Datenverkehr bei spezifizierten Zeitintervallen zu hören, mit den Schritten:
a) Detektieren eines Radarsignals auf dem ersten Kanal und in Reaktion auf die Detektion Unterbrechen des Datenverkehrs auf dem ersten Kanal,
b) Lokalisieren und Auswählen eines zweiten Kanals, der frei von Radarsignalen ist,
c) Übertragen einer ersten Kanalschaltnachricht auf dem ersten Kanal, die an aktive oder hörende Geräte signalisiert, dass eine Kanalschaltung auftritt,
d) Schalten zu und Wiederaufnehmen des Datenverkehrs auf dem zweiten Kanal,
e) Übertragen einer zweiten Kanalschaltnachricht auf dem ersten Kanal, die an aktive oder hörende Geräte signalisiert, dass eine Kanalschaltung auftritt,
**gekennzeichnet durch**,
f) wiederholendes Übertragen zweiter Kanalschaltnachrichten zu vorbestimmten Intervallen auf dem ersten Kanal und Übertragen mit einer kurzen Verzögerung eines regulären Signalfeuers auf dem zweiten Kanal,

2. Verfahren gemäß Anspruch 1, **gekennzeichnet durch** den Schritt eines Setzens eines Kanalschaltzählwertes auf Null in der ersten Kanalschaltnachricht, wodurch an aktive oder hörende Geräte signalisiert wird, dass direkt nach der Signalfeuerübertragung eine Kanalschaltung auftritt.

3. Verfahren nach Anspruch 2, **gekennzeichnet durch** den Schritt eines Setzens des Kanalschaltzählwertes auf Eins in der zweiten Kanalschaltnachricht, die in einem Signalfeuer enthalten ist, wodurch an aktive oder hörende Geräte signalisiert wird, dass direkt nach der Signalfeuerübertragung eine Kanalschaltung auftritt.

4. Verfahren nach Anspruch 2, **gekennzeichnet durch** den Schritt eines Setzens des Kanalschaltzählwertes auf Null in der zweiten Kanalschaltnachricht, die getrennt, nicht in einem Signalfeuer enthalten, übertragen wird, wodurch an aktive oder hörende Geräte signalisiert wird, dass direkt eine Kanalschaltung auftritt.

5. Verfahren nach einem der Ansprüche 1 bis 4, **gekennzeichnet durch** Fortsetzen der Schritte eines wiederholenden Übertragens zweiter Kanalschaltnachrichten zu vorbestimmten Intervallen auf dem ersten Kanal und Übertragen eines regulären Signalfeuers auf dem zweiten Kanal bis eine Auswahlnummer von zweiten Kanalschaltnachrichten auf dem ersten Kanal gesendet worden ist.

6. Verfahren nach einem der Ansprüche 1 bis 4, **gekennzeichnet durch** Fortsetzen der Schritte eines wiederholenden Übertragens zweiter Kanalschaltnachrichten zu vorbestimmten Intervallen auf dem ersten Kanal und Übertragen eines regulären Signalfeuers auf dem zweiten Kanal bis ein vorbestimmtes Zeitintervall von der Übertragung einer ersten Kanalschaltnachricht an verstrichen ist.

7. Verfahren nach einem der Ansprüche 1 bis 4, **gekennzeichnet durch** Fortsetzen der Schritte eines wiederholenden Übertragens zweiter Kanalschaltnachrichten zu vorbestimmten Intervallen auf dem ersten Kanal und Übertragen eines regulären Signalfeuers auf dem zweiten Kanal bis die Gesamtübertragungszeit für die erste und zweite Kanalschaltnachricht einen vorbestimmten Wert erreicht.

8. Verfahren nach einem der der obigen Ansprüche, **gekennzeichnet durch** den zusätzlichen Schritt eines Abbrechens eines Übertragens zweiter Kanalschaltnachrichten auf dem ersten Kanal, während Datenverkehr auf dem zweiten Kanal aufrechterhalten wird und reguläre Signalfeuer bei spezifischen Intervallen auf dem zweiten Kanal übertragen werden.

9. Zentrale Steuereinheit zum Kanalschalten in einem Paket-basierten Kommunikationsnetzwerk, bei dem Datenverkehr auf einem ersten Kanal stattfindet, der von einer zentralen Steuereinheit gesteuert wird, die ihre Präsenz auf dem ersten Kanal durch Übertragen regulärer Signalfeuer mit einem spezifizierten Zeitintervall anzeigt und bei dem Geräte, die mit der zentralen Steuereinheit verknüpft sind, aktiv sind oder einen Schlaf-Modus verlassen, um nach anstehendem Datenverkehr bei spezifischen Zeitintervallen zu hören,
a) die zentrale Steuereinheit bereitgestellt ist, Radarsignale auf dem ersten Kanal zu übertragen und in Reaktion auf die Detektion den Datenverkehr auf dem ersten Kanal zu unterbrechen,
b) die zentrale Steuereinheit bereitgestellt ist, einen zweiten Kanal zu lokalisieren und auszuwählen, der frei von Radarsignalen ist,
c) die zentrale Steuereinheit bereitgestellt ist, eine erste KanalSchaltnachricht bei dem ersten möglichen Signalfeuer-Übertragungsschlitz auf dem ersten Kanal zu übertragen und dadurch an aktive oder hörende Geräte zu signalisieren, dass eine Kanalschaltung auftritt,
d) die zentrale Steuereinheit bereitgestellt ist, den Datenverkehr auf dem zweiten Kanal zu schalten und wieder aufzunehmen,
e) die zentrale Steuereinheit bereitgestellt ist, eine zweite Kanalschaltnachricht auf dem ersten Kanal zu übertragen und dadurch an aktive oder hörende Geräte zu signalisieren, dass eine Kanalschaltung auftritt,
**gekennzeichnet durch**,
f) die zentrale Steuereinheit bereitgestellt ist, zweite Kanalschaltnachrichten bei vorbestimmten Intervallen auf dem ersten Kanal zu übertragen und zurück zu dem zweiten Kanal zu schalten, um reguläre Signalfeuer zu übertragen.

10. Zentrale Steuereinheit nach Anspruch 9, **gekennzeichnet dadurch, dass** ein Kanalschaltzählwert in der ersten Kanalschaltnachricht auf Null gesetzt wird.

11. Zentrale Steuereinheit nach Anspruch 9 oder 10, **gekennzeichnet dadurch, dass** jede zweite Kanalschaltnachricht in einem Signalfeuer enthalten ist und dass der Kanalschaltzählwert in jeder zweiten Kanalschaltnachricht auf eins gesetzt wird.

12. Zentrale Steuereinheit nach einem der Ansprüche 9 bis 11, **gekennzeichnet dadurch, dass** die zentrale Steuereinheit bereitgestellt ist, eine Übertragung der zweiten Kanalschaltnachrichten auf dem ersten Kanal abzubrechen, wenn eine vorbestimmte Nummer von zweiten Kanalschaltnachrichten übertragen worden ist oder nach einem vorbestimmten Zeitintervall von der Übertragung der ersten Kanalschaltnachricht an oder wenn die Gesamtübertragungszelt für die erste und zweite Kanalschaltnachricht einen vorbestimmten Wert erreicht und den Datenverkehr und eine Übertragung regulärer Signalfeuer auf dem zweiten Kanal Aufrecht zu erhalten.

## Revendications

1. Un procédé de commutation de canaux dans un réseau de communication à base de paquets, dans lequel le trafic de données s'effectue sur un premier canal qui est commandé par une unité de commande centrale qui indique sa présence sur un premier canal en transmettant des balises régulières à un intervalle de temps spécifié, et dans lequel des dispositifs associés à l'unité de commande centrale sont actifs, ou quittent le mode veille pour écouter le trafic de données en cours à des intervalles de temps spécifiés, comportant les étapes de:
a) détection d'un signal radar sur le premier canal et en réponse à la détection, interruption du trafic de données sur le premier canal,
b) localisation et sélection d'un deuxième canal qui est sans signaux radar,
c) émission d'un premier message de commutation canal sur le premier canal, signalisation aux dispositifs actifs et/ou en écoute qu'une commutation de canal se produira,
d) commutation et reprise du trafic de données sur le deuxième canal,
e) émission d'un deuxième message de commutation de canal sur le premier canal, signalisation aux dispositifs actifs et/ou en écoute qu'une commutation de canal se produira,
**caractérisé par**
f) l'émission répétitive de deuxièmes messages de commutation de canal à des intervalles prédéterminés sur le premier canal et avec un court délai, émission d'une balise régulière sur un deuxième canal.

2. Un procédé selon la revendication 1, **caractérisé par** l'étape de réglage d'un temps de commutation de canal à zéro dans le premier message de commutation de canal, signalisation ainsi aux dispositifs actifs et/ou en écoute qu'une commutation de canal se produira immédiatement après l'émission de balise.

3. Un procédé selon la revendication 2, **caractérisé par** l'étape de réglage du temps de commutation de canal à un dans le deuxième message de commutation de canal contenu dans une balise, signalisation ainsi aux dispositifs actifs et/ou en écoute qu'une commutation de canal se produira avant la prochaine émission de balise.

4. Un procédé selon la revendication 2, **caractérisé par** l'étape de réglage du temps de commutation de canal à zéro dans le deuxième message de commutation de canal qui est envoyé séparément, non contenu dans une balise, signalant ainsi aux dispositifs actifs et/ou en écoute qu'une commutation de canal se produira immédiatement.

5. Un procédé selon l'une quelconque des revendications 1 à 4, **caractérisé par** une continuation des étapes d'émission répétitive de deuxièmes messages de commutation de canal à intervalles prédéterminés sur le premier canal et émission d'une balise régulière sur le deuxième canal jusqu'à ce qu'un nombre choisi de deuxièmes messages de commutation de canal ait été envoyé sur le premier canal.

6. Un procédé selon l'une quelconque des revendications 1 à 4, **caractérisé par** une continuation des étapes d'émission répétitive de deuxièmes messages de commutation de canal à intervalles prédéterminés sur le premier canal et émission d'une balise régulière sur le deuxième canal jusqu'à ce qu'un intervalle de temps prédéterminé ait passé depuis l'émission du premier message de commutation de canal.

7. Un procédé selon l'une quelconque des revendications 1 à 4, **caractérisé par** une continuation des étapes d'émission répétitive de deuxièmes messages de commutation de canal à intervalles prédéterminés sur le premier canal et d'émission d'une balise régulière sur le deuxième canal jusqu'à ce que le temps d'émission total des messages de commutation pour le premier et deuxième canal ait atteint une valeur prédéterminée.

8. Un procédé selon l'une quelconque des revendications précédentes, **caractérisé par** l'étape additionnelle d'annulation d'émission de deuxièmes messages de commutation de canal sur le premier canal, tout en maintenant le trafic de données sur le deuxième canal et émission de balises régulières à des intervalles spécifiques sur le premier canal.

9. Une unité de commande centrale pour la commutation de canal dans un réseau de communication à base de paquets, où le trafic de données s'effectue sur un premier canal qui est commandé par l'unité de commande centrale prévue pour indiquer sa présence sur le premier canal par, l'émission de balises régulières avec un intervalle de temps spécifique, et où des dispositifs associés à l'unité de commande centrale sont actifs ou quittent le mode veille pour écouter le trafic de données en cours à des intervalles de temps spécifiés, où
a) l'unité de commande centrale est prévue pour détecter des signaux radar sur le premier canal et en réponse à la détection, interrompre le trafic de données sur le premier canal,
b) l'unité de commande centrale est prévue pour localiser et sélectionner un deuxième canal qui est sans signaux radar,
c) l'unité de commande centrale est prévue pour émettre un premier message de commutation de canal à la première fente possible d'émissions de balises au premier canal et ainsi signaler aux dispositifs actifs et/ou en écoute qu'une commutation de canal se produira,
d) l'unité de commande centrale est prévue pour commuter et reprendre le trafic de données sur le deuxième canal,
e) l'unité de commande centrale est prévue pour émettre un deuxième message de commutation de canal sur le premier canal et ainsi signaler aux dispositifs actifs et/ou en écoute qu'une commutation de canal se produira,
**caractérisé en ce que**:
f) l'unité de commande centrale est prévue pour émettre des deuxièmes messages de commutation de canal à des intervalles prédéterminés sur le premier canal et pour revenir au deuxième canal afin d'émettre des balises régulières.

10. Une unité de commande centrale selon la revendication 9, **caractérisée en ce qu'**un temps de commutation de canal dans le premier message de commutation de canal est réglé à zéro.

11. Une unité de commande centrale selon la revendication 9 ou la revendication 10, **caractérisée en ce que** chaque deuxième message de commutation de canal est contenu dans une balise et **en ce que** le temps de commutation de canal dans chaque deuxième message de commutation de canal est réglé à un.

12. Une unité de commande centrale selon l'une quelconque des revendications 9-11, **caractérisée en ce que** l'unité de commande centrale est prévue pour annuler l'émission des deuxièmes messages de commutation de canal sur le premier canal lorsqu'un nombre prédéterminé de deuxièmes messages de commutation de canal ont été émis où après un intervalle de temps prédéterminé depuis l'émission du premier message de commutation de canal, ou lorsque le temps total d'émission des premiers et deuxièmes messages de commutation de canal atteint une valeur spécifique ainsi que pour maintenir le trafic de données et l'émission de balises régulières sur le deuxième canal.
